# EUROPÄISCHE PATENTSCHRIFT

(11) **EP 2 851 225 B1**
(45) Veröffentlichungstag und Bekanntmachung des Hinweises auf die Patenterteilung: **21.11.2018**
(21) Anmeldenummer: 14184759.0
(22) Anmeldetag: 15.09.2014
(51) Int. Cl.: B60J 5/06

(54) **Nutzfahrzeugaufbau mit einer Seitenplane, Nutzfahrzeug mit einem derartigen Nutzfahrzeugaufbau und Verfahren zur Herstellung eines derartigen Nutzfahrzeugaufbaus**
Commercial vehicle body having a side curtain, commercial vehicle having such a commercial vehicle body and method for manufacturing such a commercial vehicle body
Structure de véhicule utilitaire doté de bâche latérale, véhicule utilitaire avec une telle structure et procédé de fabrication d'une telle structure de véhicule utilitaire

(30) Priorität: 24.09.2013 DE 102013110517
(43) Veröffentlichungstag der Anmeldung: 25.03.2015
(73) Patentinhaber: Kögel Trailer GmbH & Co. KG, 89349 Burtenbach (DE)
(72) Erfinder: Kalischko, Thomas, 86470 Tannhausen (DE)
(74) Vertreter: Meissner Bolte Partnerschaft mbB

(56) Entgegenhaltungen:
- EP-A2- 2 617 591
- CH-A5- 605 237
- DE-A1- 10 131 660
- DE-U1-202006 003 548

## Beschreibung

Die Erfindung betrifft einen Nutzfahrzeugaufbau mit einer Seitenplane und mit einem Vertikalrohr, wobei die Seitenplane einen Keder aufweist, der in einem Umschlagsabschnitt der Seitenplane angeordnet oder anordenbar ist. Des Weiteren betrifft die Erfindung ein Nutzfahrzeug, insbesondere Sattelauflieger oder Sattelaufliegegespann mit einem derartigen Nutzfahrzeugaufbau und ein Verfahren zur Herstellung eines derartigen Nutzfahrzeugaufbaus.

Aus dem Stand der Technik, wie z.B. DE 20 2006 003 548 U1, sind Seitenplanen für Nutzfahrzeugaufbauten bekannt, welche horizontal oder vertikal aufgeschweißte Gurtbänder aufweisen. Diese Bänder dienen zur Verstärkung und Versteifung der Lkw-Planen und dienen gleichzeitig der Ladungssicherung.

Sogenannte PVC-Gurtbänder können beispielsweise auf LKW-Planen aus PVC-Material aufgebracht werden. Dies ist beispielsweise durch sogenanntes Heißluftschweißen möglich. Auch mit Hilfe eines Hochfrequenzschweißverfahrens können Gurtbänder bzw. PVC-Gurtbänder auf LKW-Planen aufgebracht werden. In der Vergangenheit hat sich gezeigt, dass derartig mit Gurtbändern versehene Seitenplanen bzw. LKW-Planen oftmals reißen.

Aus dem Vorgenannten ist es daher Aufgabe der vorliegenden Erfindung, die vorerwähnten Nachteile zu überwinden und einen Nutzfahrzeugaufbau mit einer Seitenplane und mit einem Vertikalrohr anzugeben, welcher hinsichtlich der Verschleißfähigkeit bzw. Lebensdauer verbessert ist. Ferner ist es Aufgabe der Erfindung, ein Nutzfahrzeugbau mit einem derartigen Nutzfahrzeugaufbau anzugeben. Außerdem ist es Aufgabe der Erfindung ein Verfahren zur Herstellung eines Nutzfahrzeugaufbaus anzugeben.

Erfindungsgemäß wird diese Aufgabe im Hinblick auf den Nutzfahrzeugaufbau durch den Gegenstand des Patentanspruches 1, im Hinblick auf das Nutzfahrzeug durch den Gegenstand des Patentanspruches 12 und im Hinblick auf das Herstellungsverfahren durch den Gegenstand des Patentanspruches 13 gelöst.

So beruht die Erfindung auf dem Gedanken, einen Nutzfahrzeugaufbau mit einer Seitenplane und mit einem Vertikalrohr anzugeben, wobei die Seitenplane einen Keder aufweist, der in einem Umschlagsabschnitt der Seitenplane angeordnet oder anordenbar ist.

Erfindungsgemäß weist die Seitenplane entlang des Umschlagsabschnitts mindestens eine Aussparung auf, wobei ein Verstärkungselement in der Aussparung des Umschlagsabschnitts angeordnet oder anordenbar ist.

Die Seitenplane eines Nutzfahrzeugaufbaus kann eine vordere Seitenkante sowie eine hintere Seitenkante aufweisen. Die vordere Seitenkante einer Seitenplane ist vorzugsweise in Fahrtrichtung eines Nutzfahrzeuges vorne angeordnet, d.h. im Bereich einer Vorderwand des Nutzfahrzeugaufbaus. Die hintere Seitenkante ist vorzugsweise in Fahrtrichtung des Nutzfahrzeugs hinten angeordnet, d.h. im Bereich eines Heckportals.

Sofern zur Verriegelung einer Seitenplane eine sogenannte Wickelwelle zum Einsatz kommt, kann beispielsweise die hintere Seitenkante der Seitenplane einen Umschlagsabschnitt aufweisen. Bei diesem Umschlagsabschnitt handelt es sich um eine längliche Schlaufe der Seitenplane, welche durch Umbiegung der hinteren Seitenkante einer Seitenplane und entsprechende Befestigung der hinteren Seitenkante an der Außen- bzw. Innenfläche der Seitenplane gebildet werden kann. Die Schlaufe bzw. längliche Schlaufe bzw. der Umschlagsabschnitt der Seitenplane erstreckt sich vorzugsweise über die gesamte Höhe bzw. vertikale Erstreckung einer Seitenplane im Bereich der hinteren Seitenkante. In einem derartigen Umschlagsabschnitt der Seitenplane kann ein Keder angeordnet oder anordenbar sein.

Erfindungsgemäß weist die Seitenplane entlang des Umschlagabschnitts mindestens eine Aussparung bzw. einen Ausschnitt auf, wobei ein Verstärkungselement in der Aussparung angeordnet oder anordenbar ist. In anderen Worten wird das aufgrund der Aussparung bzw. des Ausschnitts fehlende Seitenplanenmaterial durch ein Verstärkungselement ersetzt.

Das Verstärkungselement kann ein Gurtband, insbesondere ein PVC-Gurtband und/oder ein PVC beschichtetes Gurtband, sein.

Das Verstärkungselement bzw. insbesondere das Gurtband kann zumindest abschnittsweise auf der Seitenplane befestigt sein. Demnach kann das Verstärkungselement auf der inneren Oberfläche der Seitenplane und/oder auf der äußeren Oberfläche der Seitenplane befestigt sein. Bei der inneren Oberfläche der Seitenplane handelt es sich um diejenige Seite bzw. Oberfläche der Plane, welche zum Laderaum eines Nutzfahrzeugaufbaus weist bzw. den Laderaum eines Nutzfahrzeugaufbaus begrenzt. Bei der äußeren Oberfläche einer Seitenplane handelt es sich um die nach außen weisende Oberfläche eines Nutzfahrzeugaufbaus, also um diejenige Oberfläche, welche den äußeren Witterungsbedingungen ausgesetzt ist. Demnach ist es besonders vorteilhaft, das mindestens ein Verstärkungselement bzw. das Gurtband auf der Innenseite bzw. inneren Oberfläche der Seitenplane zu befestigen, sodass das Verstärkungselement nicht den äußeren Witterungsbedingungen ausgesetzt ist. Das Verstärkungselement kann mit der Seitenplane verklebt und/oder verschweißt und/oder vernäht und/oder vernietet und/oder verschraubt sein.

Das Verstärkungselement, welches insbesondere als Gurtband ausgebildet ist, ist zumindest abschnittsweise horizontal auf der Seitenplane, fluchtend zu mindestens einer Aussparung des Umschlagabschnitts der Seitenplane angeordnet oder anordenbar.

In anderen Worten wird die Seitenplane im Bereich des Umschlagsabschnittes um den Keder ausgespart bzw. ausgeschnitten. Aufgrund dessen kann in diesem Bereich der Aussparung bzw. des Ausschnittes ein Verstärkungselement, insbesondere ein Gurtband, insbesondere ein Horizontalgurtband, anstelle der Seitenplane um den Keder bzw. einen Kederabschnitt geschlungen werden.

Der Vorteil des erfindungsgemäßen Nutzfahrzeugaufbaus im Vergleich zum bekannten Stand der Technik liegt u.a. in der verbesserten bzw. erhöhten Kraftaufnahme der Seitenplane im Bereich der Verstärkungselemente bzw. der Gurtbänder. Gemäß bekanntem Stand der Technik wurden Horizontalgurte von Seitenplanen bislang nur bis zu Beginn des Keders an Seitenplanen geschweißt, so dass gemäß erfindungsgemäßem Nutzfahrzeugaufbau des Weiteren ein Steifigkeitssprung im Bereich der Seitenkante der Seitenplane entfällt.

Die Aussparung des Umschlagabschnitts der Seitenplane weist vorzugsweise eine U-förmige Kontur und/oder rechteckförmige Kontur auf und unterbricht den Umschlagsabschnitt der Seitenplane abschnittsweise.

Es ist möglich, dass die Seitenplane bzw. der Umschlagsabschnitt der Seitenplane mehrere, insbesondere mehrere derartige, Aussparungen aufweist, wobei in einem derartigen Fall vorzugsweise in jeder einzelnen Aussparung ein Verstärkungselement bzw. ein Gurtband, insbesondere ein Horizontalgurtband, angeordnet oder anordenbar ist.

In einer Ausführungsform der Erfindung weist das Verstärkungselement einen Umschlagsabschnitt auf. Vorzugsweise ist der Keder in dem Umschlagsabschnitt des Verstärkungselements angeordnet oder anordenbar. In anderen Worten kann das Verstärkungselement, insbesondere in Form eines Horizontalgurts, in die Aussparung des Umschlagabschnitts der Seitenplane eingebracht werden, wobei das Verstärkungselement über den Keder geführt und in Richtung der Seitenplane zurückgeschleift wird, so dass das Verstärkungselement wie die Seitenplane einen Umschlagsabschnitt bildet. Vorzugsweise ist der Keder in dem Umschlagsabschnitt des Verstärkungselements angeordnet oder anordenbar.

Das Verstärkungselement weist vorzugsweise mindestens einen Endabschnitt sowie einen Längsabschnitt auf, wobei ein Endabschnitt des Verstärkungselements mit einem Längsabschnitt des Verstärkungselements verbunden oder verbindbar ist. Insbesondere kann der Endabschnitt mit dem Längsabschnitt des Verstärkungselements verklebt und/oder verschweißt und/oder vernäht und/oder vernietet und/oder verschraubt sein bzw. werden.

Da der Endabschnitt des Verstärkungselements mit dem Längsabschnitt des Verstärkungselements verbunden wird, ist der Umschlagsabschnitt des Verstärkungselements dauerhaft gebildet. Der Längsabschnitt des Verstärkungselements ist vorzugsweise der Abschnitt bzw. Teil des Verstärkungselements, welches mit der Seitenplane, insbesondere fluchtend zu mindestens einer Aussparung des Umschlagabschnittes, verbunden ist. In einer besonders bevorzugten Ausführungsform der Erfindung ist das Verstärkungselement im Bereich des Längsabschnittes auf der Seitenplane befestigt. Der Endabschnitt des Verstärkungselements ragt vorzugsweise über den Nutzfahrzeugaufbau in unverbundenem Zustand hinaus. Als Endabschnitt des Verstärkungselements kann in anderen Worten die in Relation zur Seitenplane zusätzliche Länge eines Verstärkungselements betreffen.

In einer weiteren Ausführungsform der Erfindung kann das Verstärkungselement mit dem Vertikalrohr und/oder mit dem Keder verbunden oder verbindbar sein. Hierbei kann das Verstärkungselement mit dem Vertikalrohr und/oder mit dem Keder beispielsweise verklebt und/oder verschweißt und/oder vernäht und/oder vernietet und/oder verschraubt sein. In einer weiteren Ausführungsform der Erfindung kann es vorgesehen sein, dass in dem Vertikalrohr auf Höhe bzw. horizontal fluchtend zum Verstärkungselement, der Keder in vertikaler Erstreckung unterbrochen ist und anstelle des Keders ein weiteres Rundmaterial vorgesehen ist, welches in der Laufbahn der Wickelwelle bzw. des Vertikalrohrs positioniert ist. Dieses Rundmaterial ist als Führungsmittel zu verstehen, so dass das Verstärkungselement in dem Vertikalrohr geführt und/oder arretiert werden kann.

Weiterhin kann es vorgesehen sein, dass der Keder und/oder das Vertikalrohr ein Führungsmittel zur Führung und/oder Arretierung des Verstärkungselements aufweist. Dies kann wie bereits beschrieben anstelle des Keders als weiteres Element ausgebildet sein. Des Weiteren ist es denkbar, dass der Keder auf Höhe des Verstärkungselements mit einem Führungsmittel versehen wird. Bei dem Führungsmittel kann es sich beispielsweise um eine in den Keder eingebrachte Nut handeln. Außerdem ist es denkbar, dass das Führungsmittel als an den Keder angebrachte Öse und/oder Aufnahme und/oder Schlitz ausgebildet ist. In anderen Worten ist das Führungsmittel derart ausgebildet, dass dieses im Vertikalrohr und/oder am Keder auf Höhe der Aussparung des Umschlagabschnitts des Verstärkungselements angeordnet ist und weiterhin eine derartige Form und/oder derartige Elemente aufweist, um das Verstärkungselement, insbesondere ein Gurtband, zu führen bzw. zu arretieren und im Bereich der Wickelwelle durchzuschleifen.

Der Keder des erfindungsgemäßen Nutzfahrzeugaufbaus kann in einer Kederaufnahme des Vertikalrohrs angeordnet oder anordenbar sein.

Gemäß einem nebengeordneten Aspekt beruht die Erfindung auf dem Gedanken, ein Nutzfahrzeug, insbesondere einen Sattelauflieger oder ein Sattelaufliegergespann, mit einem zuvor beschriebenen Nutzfahrzeugaufbau anzugeben.

Gemäß einem weiteren nebengeordneten Aspekt beruht die Erfindung auf dem Gedanken, ein Verfahren zur Herstellung eines zuvor beschriebenen Nutzfahrzeugaufbaus anzugeben.

Das erfindungsgemäße Verfahren beruht darauf, dass in einem ersten Schritt eine Seitenplane mit einem Umschlagsabschnitt zur Verfügung gestellt wird. In den Umschlagsabschnitt der Seitenplane wird zunächst mindestens eine Aussparung eingebracht. Demnach kann der Planenumschlag um den Keder im Bereich des später anzubringenden Verstärkungselements bzw. Horizontalgurtes ausgeschnitten werden. Die Form der Aussparung bzw. des Ausschnittes kann je nach Anwendungsfall variieren.

In einem weiteren Schritt wird das Verstärkungselement, insbesondere in Form eines Gurtbandes, zumindest abschnittsweise auf der Seitenplane befestigt. Das Verstärkungselement wird insbesondere horizontal auf der Seitenplane, insbesondere fluchtend zu mindestens einer Aussparung des Umschlagsabschnitts der Seitenplane befestigt. Das Befestigen des Verstärkungselementes auf der Seitenplane kann durch Verkleben und/oder Verschweißen und/oder Vernähen und/oder Vernieten und/oder Verschrauben erfolgen.

In einem weiteren Schritt wird das Verstärkungselement in der Aussparung des Umschlagsabschnittes der Seitenplane angeordnet. Das Anordnen kann beispielsweise dadurch erfolgen, dass das Verstärkungselement bzw. das Gurtband in die Aussparung des Umschlagsabschnitts der Seitenplane eingeführt wird und um einen Keder und/oder ein Führungsmittel des Keders und/oder des Vertikalrohrs angelegt und/oder arretiert wird, so dass das Verstärkungselement insbesondere der Endabschnitt des Verstärkungselements zum Längsabschnitt des Verstärkungselements bzw. zur Seitenplane zurückgeschleift wird.

In einer Ausführungsform der Erfindung kann bezüglich des in der Aussparung des Umschlagsabschnitts der Seitenplane angeordneten Verstärkungselements ein weiterer Umschlagsabschnitt, nämlich des Verstärkungselements, gebildet werden. In einem weiteren Schritt wird der Endabschnitt des Verstärkungselements mit dem Längsabschnitt des Verstärkungselements befestigt, so dass der Umschlagsabschnitt des Verstärkungselements dauerhaft fixiert ist.

Die Erfindung wird im Folgenden anhand eines Ausführungsbeispiels unter Bezugnahme auf die beigefügten Zeichnungen näher erläutert. Darin zeigen:
- Fig. 1:: eine Seitenansicht einer Seitenplane für einen erfindungsgemäßen Nutzfahrzeugaufbau gemäß einem bevorzugten Ausführungsbeispiel;
- Fig. 2 - 5:: Detailansichten bezüglich der einzelnen Verfahrensschritte zur Herstellung eines erfindungsgemäßen Nutzfahrzeugaufbaus;
- Fig. 6:: ein Vertikalrohr mit darin befindlichem Führungsmittel;
- Fig. 7:: eine Draufsicht gemäß Fig. 6; und
- Fig. 8:: eine Seitenplane mit an der unteren Kante befindlichem Verstärkungselement.

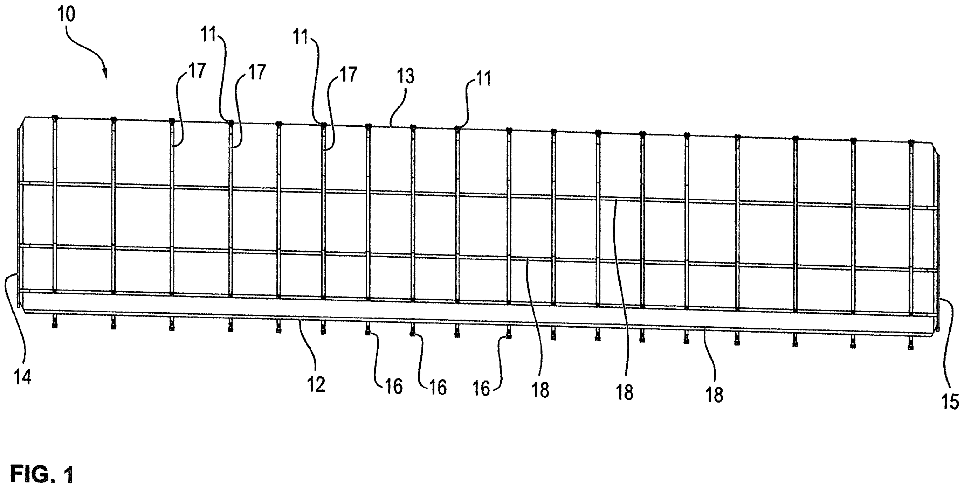

Fig. 1 zeigt eine Seitenplane 10 für einen Nutzfahrzeugaufbau, insbesondere für einen Sattelanhänger. Die Seitenplane 10 weist eine untere Kante 12, eine obere Kante 13 und Seitenkanten 14 und 15 auf. Die Seitenplane 10 wird sowohl im Zusammenhang mit einem Nutzfahrzeugaufbau, an dem die Seitenplane 10 angeordnet ist, als auch separat offenbart.

Die in Fig. 1 dargestellte Seitenplane ist vorzugsweise mit einem Nutzfahrzeugaufbau verbunden und kann als Schiebeplane ausgebildet sein. Insbesondere kann die Seitenplane 10 an der oberen Kante 13 mit Rollen 11 verbunden sein, die in einer Rollenführung entlang eines Dachholms des Nutzfahrzeugaufbaus verschiebbar sind. Der Nutzfahrzeugaufbau kann ferner eine Spannvorrichtung aufweisen, die es ermöglicht, die Seitenplane im geschlossenen Zustand zu spannen bzw. zu straffen. Die Spannvorrichtung weist insbesondere eine Wickelwelle auf, die sich von einem Boden des Nutzfahrzeugaufbaus zu einem Dach erstreckt. Die Wickelwelle bzw. das Vertikalrohr ist im Wesentlichen vertikal angeordnet. Mit anderen Worten erstreckt sich die Wickelwelle bzw. das Vertikalrohr zwischen der unteren Kante 12 und der oberen Kante 13 der Seitenplane 10.

Die vordere Seitenkante 14 der Seitenplane 10 ist vorzugsweise in Fahrtrichtung eines Nutzfahrzeugs vorne angeordnet, d.h. im Bereich einer Vorderwand des Nutzfahrzeugaufbaus. Die hintere Seitenkante 15 ist vorzugsweise in Fahrtrichtung des Nutzfahrzeugaufbaus hinten angeordnet, d.h. im Bereich eines Heckportals. Grundsätzlich ist die Erfindung nicht auf Seitenplanen 10 beschränkt, die sich entlang der Seiten eines Nutzfahrzeugs erstrecken. Die Seitenplane 10 kann vielmehr auch eine Fahrtrichtung vordere oder hintere Begrenzung eines Laderaums bzw. Nutzfahrzeugaufbaus bilden.

Die Seitenplane 10 ist vorzugsweise durch eine Kederverbindung mit der Wickelwelle bzw. dem Vertikalrohr 27 verbunden. Dazu weist das Vertikalrohr eine Kederaufnahme auf, in der ein Keder 19 der Seitenplane angeordnet sein kann. Die Seitenplane 10 weist an einer vorderen Seitenkante 14 und/oder an einer hinteren Seitenkante 15 einen Keder auf. Wenigstens einer der Keder ist in einer Kederaufnahme, d.h. einer durchgängigen Nut der Wickelwelle bzw. des Vertikalrohrs angeordnet. Vorzugsweise ist die Seitenplane 10 an beiden Seitenkanten 14 und 15 über einen Keder mit einer Wickelwelle gekoppelt.

Die Seitenplane 10 kann ferner Ösen aufweisen, die entlang der unteren Kante 12 der Seitenplane 10 verteilt angeordnet sind. Die Ösen ermöglichen die Durchführung von Krampen, die fest mit dem Rahmen des Nutzfahrzeugs verbunden sind. Durch die Krampen kann ein Drahtseil geführt werden, das einen zollsicheren Verschluss des Nutzfahrzeugaufbaus ermöglicht. Ferner weist die Seitenplane 10 im Bereich der unteren Kante 12 Spanngurte 16 auf, so dass die Seitenplane 10 vertikal gespannt werden kann.

Die Seitenplane 10 weist des Weiteren vertikale Gurtbänder 17 sowie horizontale Gurtbänder 18 auf. Sowohl die vertikalen Gurtbänder 17 als auch die horizontalen Gurtbänder 18 dienen zur Verstärkung und Versteifung der Seitenplane 10. Gleichzeitig können die Gurt- bzw. Verstärkungsbänder auch zur Ladungssicherung eingesetzt werden.

Fig. 1 zeigt, dass der Abstand der vertikalen Gurtbänder zueinander in der Mitte der Seitenplane 10 geringer als im Bereich der Seitenkanten 14 und 15 ist. Vorzugsweise sind die vertikalen Gurtbänder 17 an derartigen Positionen der Seitenplane 10 angeordnet, welche an der oberen Kante 13 mit Rollen 11 versehen werden.

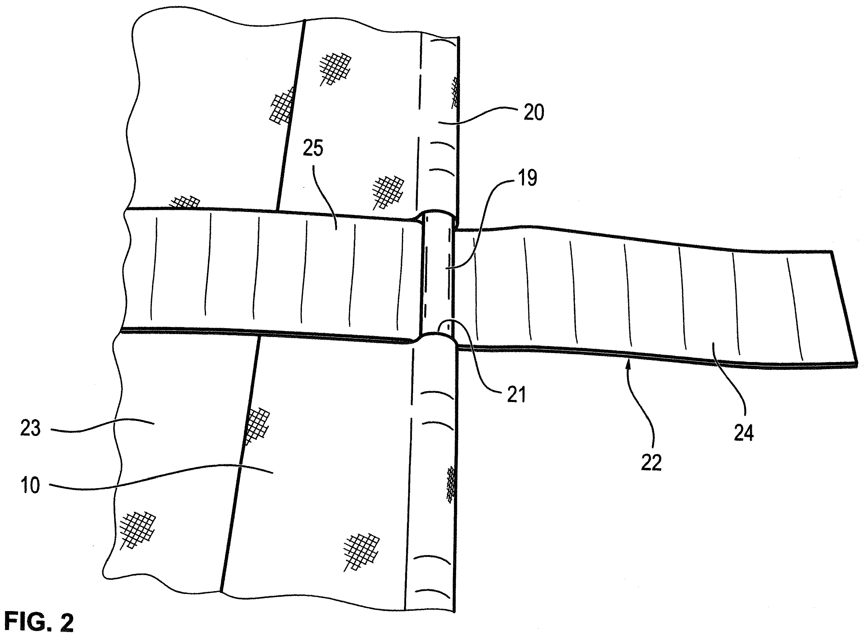

Fig. 2 zeigt eine Detaildarstellung der hinteren Seitenkante 15 der Seitenplane 10. Wie dargestellt, weist die Seitenplane 10 einen Keder 19 auf, der in einem Umschlagsabschnitt 20 der Seitenplane 10 angeordnet ist. Die Seitenplane 10 weist entlang des Umschlagabschnitts 20 eine Aussparung 21 auf, wobei ein Verstärkungselement 22 in der Aussparung 21 angeordnet ist. Der Umschlagsabschnitt 20 der Seitenplane 10 kann beispielsweise durch Verkleben und/oder Verschweißen der Seitenkante 15 der Seitenplane 10 erfolgen. Hierzu wird zunächst die Seitenkante 15 bzw. der zugehörige Endbereich der Seitenplane 10 umgebogen, so dass die Seitenkante auf der Innenseite 23 der Seitenplane 10 angeklebt bzw. angeschweißt werden kann. Als Innenseite 23 einer Seitenplane 10 wird die zum Laderaum hinweisende Oberfläche der Seitenplane 10 bezeichnet. Dies wird lediglich als mögliches Ausführungsbeispiel dargestellt. Es ist auch möglich, den Umschlagsabschnitt 20 der Seitenplane 10 durch Befestigung der hinteren Seitenkante 15 auf der nicht dargestellten Außenfläche der Seitenplane 10 herzustellen.

Bei der Aussparung 21, welche in den Umschlagsabschnitt 20 der Seitenplane 10 eingebracht ist, handelt es sich um einen Ausschnitt, welcher eine U-förmige bzw. rechteckförmige Kontur aufweist.

Bei dem Verstärkungselement 22 handelt es sich im dargestellten Beispiel um ein Gurtband. Dieses Gurtband weist einen Endabschnitt 24 sowie einen Längsabschnitt 25 auf. Bei dem Endabschnitt 24 handelt es sich um denjenigen Teil des Verstärkungselements 22, welcher über die äußere Kante sowie den Keder 19 hinausragt. In anderen Worten handelt es sich bei dem Endabschnitt 24 um die über die Seitenplane 10 hinausragende Verlängerung des Verstärkungselements 22 im unbefestigten Zustand. Das Verstärkungselement 22 ist vorzugsweise auf der Seitenplane 10 im Bereich des Längsabschnitts 25 befestigt. Insbesondere ist das Verstärkungselement mit der Seitenplane 10 verklebt und/oder verschweißt und/oder vernäht und/oder vernietet und/oder verschraubt. Das Verstärkungselement 22 ist im dargestellten Beispiel horizontal auf der Seitenplane 10 insbesondere fluchtend zu der Aussparung 21 des Umschlagabschnitts 20 angeordnet.

Der in Fig. 2 dargestellte Zustand betrifft die ersten Schritte des erfindungsgemäßen Verfahrens, also die Anbringung einer Aussparung 21 in den Umschlagsabschnitt 20 der Seitenplane 10 sowie das zumindest abschnittsweise Befestigen des Verstärkungselements 22 auf der Seitenplane 10 und die Anordnung des Verstärkungselements 22 in der Aussparung 21 des Umschlagabschnittes 20. Das dargestellte Verstärkungselement 22 bzw. dessen Endabschnitt 24 wird mindestens einmal um den Keder 19 geschlungen.

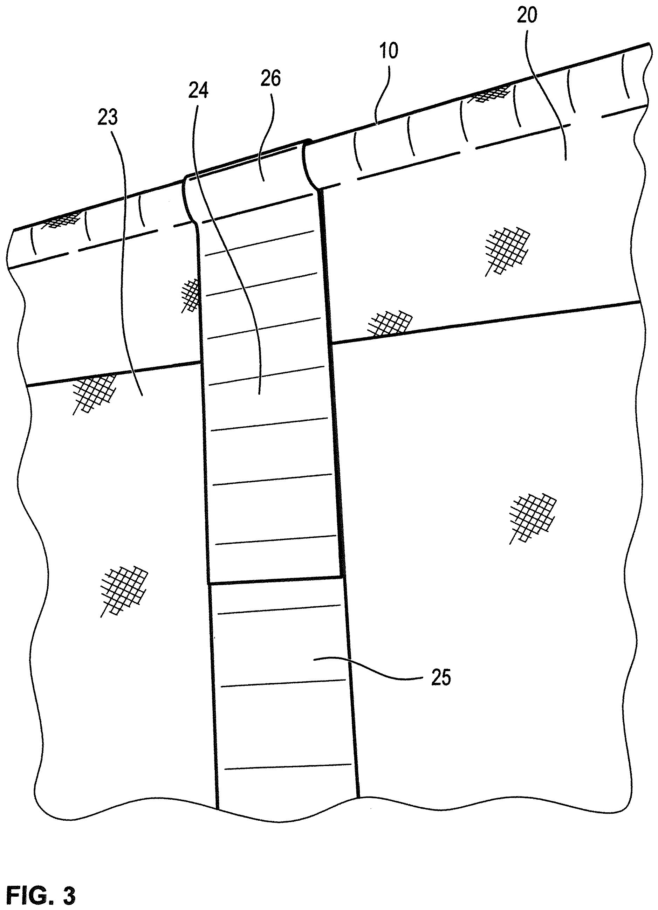

In Fig. 3 wird das Verstärkungselement 22 in dem den Keder 19 vollständig umschliegenden Zustand dargestellt. Es zeigt sich, dass bezüglich des Verstärkungselements 22 ebenfalls ein Umschlagsabschnitt 26 gebildet wird. Dies erfolgt durch Befestigen des Endabschnitts 24 auf dem Längsabschnitt 25 des Verstärkungselements 22. Vorzugsweise wird der Umschlagsabschnitt 26 des Verstärkungselements 22 auf der gleichen Seite der Seitenplane 10 wie der Umschlagsabschnitt 20 der Seitenplane 10 gebildet. Das heißt, die Befestigung des Endabschnitts 24 auf dem Längsabschnitt 25 des Verstärkungselements 22 erfolgt ebenfalls auf der Innenseite 23 der Seitenplane 10. Die Befestigung des Endabschnitts 24 des Verstärkungselements 22 erfolgt vorzugsweise durch Verkleben und/der Verschweißen und/oder Vernähen und/oder Vernieten und/oder Verschrauben.

Im dargestellten Beispiel ist der Keder 19 in den Umschlagsabschnitt 26 des Verstärkungselements 22 angeordnet. Bezüglich der Materialstärke des Verstärkungselements 22 bzw. des Gurtbandes ist darauf zu achten, dass der Umschlagsabschnitt 26 in Kombination mit dem Keder 19 noch einen derartigen minimalen Durchmesser aufweist, dass der Keder inklusive Umschlagsabschnitt 26 des Verstärkungselements 22 in einer nicht dargestellten Wickelwelle bzw. einem Vertikalrohr angeordnet werden kann. Vorzugsweise weist das Verstärkungselement die gleiche Materialstärke wie die Seitenplane 10 auf. Die Materialdicke bzw. Materialstärke des Verstärkungselementes 22 kann auch minimal größer als die Materialstärke bzw. Materialdicke der Seitenplane 10 sein.

Nachdem der Umschlagsabschnitt 26 des Verstärkungselements 22 gebildet und befestigt wurde, kann die Seitenplane 10 sowie der Keder 19 mit dem befestigten Verstärkungselement 22 in einem Vertikalrohr 27 bzw. Wickelwelle angeordnet werden. Das Vertikalrohr 27 weist hierzu eine Kederaufnahme 28 auf. Die Seitenplane 10 kann demnach mit Hilfe des Keders 19 in die Kederaufnahme 28 des Vertikalrohrs 27 eingeschoben werden.

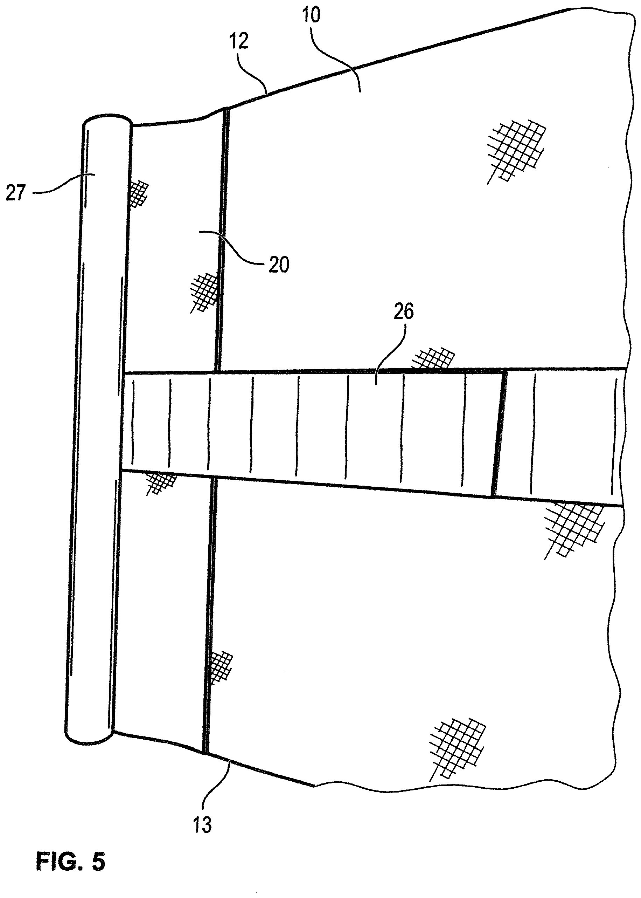

Fig. 5 zeigt die Seitenplane 10 im vollständig in das Vertikalrohr 27 eingeführten Zustand. Im dargestellten Beispiel ist bezüglich der Vertikalausrichtung der Seitenplane lediglich ein Abschnitt mit einem horizontalen Verstärkungselement 22 zu erkennen. Es ist auch denkbar bzw. vorteilhaft in vertikaler Erstreckung der Seitenplane 10 mehrere horizontale Verstärkungselemente auszubilden. Außerdem zeigt die Fig. 5, dass der Umschlagsabschnitt 26 des Verstärkungselements 22 in horizontaler Erstreckung länger ausgebildet ist, als der Umschlagsabschnitt 20 der Seitenplane 10.

Für alle Ausführungsformen des erfindungsgemäßen Nutzfahrzeugaufbaus gilt, dass diese hinsichtlich senkrecht zur Seitenplane einwirkender Kräfte verbessert ist. Sofern eine derartige Kraft senkrecht zur Seitenplane aufgebracht wird, wird diese Kraft über das Verstärkungselement 22 bzw. den Horizontalgurt direkt in die Wickelwelle bzw. das Vertikalrohr 27 geleitet. Beim bekannten Stand der Technik wird die Kraft hingegen vom Gurt über die Plane in die Wickelwelle geleitet. Abhängig von der Materialstärke des aufgeschweißten Gurtbandes kann die Plane diese Kraft nicht mehr aufnehmen und reißt. Demnach ist mit Hilfe des erfindungsgemäßen Nutzfahrzeugaufbaus eine höhere Kraftaufnahme möglich.

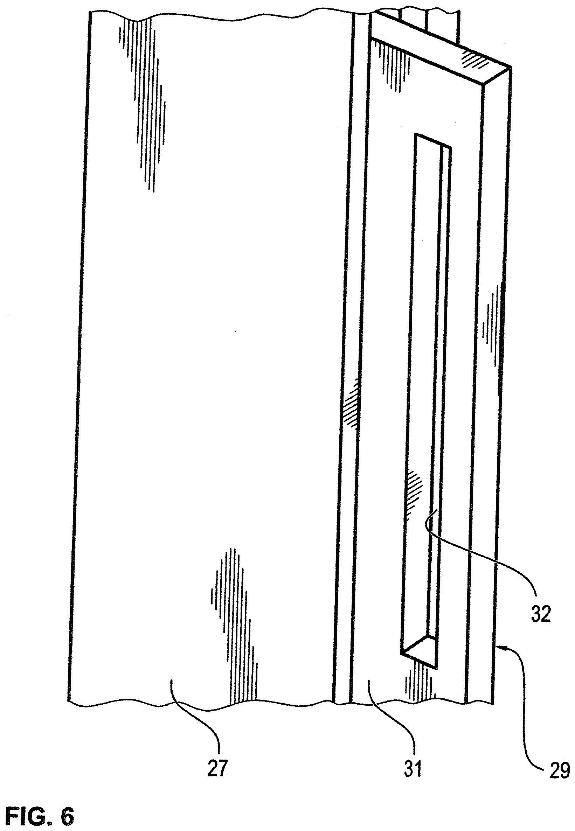

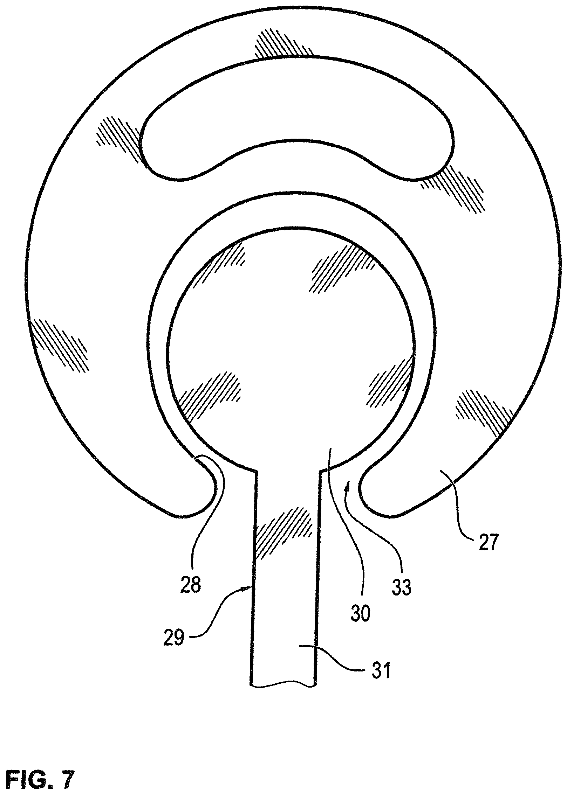

In einer weiteren Ausführungsform der Erfindung gemäß dargestellten Beispiel in Fig. 3 kann das Vertikalrohr 27 ein Führungsmittel 29 zur Führung und/oder Arretierung des Verstärkungselements 22 aufweisen. Im dargestellten Beispiel (Figuren 6 und 7) ist in der Kederaufnahme 28 das Führungsmittel 29 eingebracht. Das Führungsmittel 29 befindet sich auf horizontal gleicher Höhe wie ein zu befestigendes Verstärkungselement 22. Das Führungsmittel 29 ersetzt somit einen Keder 19 im Bereich des Verstärkungselements 22. Das Führungsmittel 29 besteht aus einem kreiszylinderförmigen Gleitelement 30, an welchem eine Fahne 31 angeordnet bzw. befestigt ist. Das Gleitelement 30 ist in der Kederaufnahme 28 des Vertikalrohrs 27 gelagert. Die Fahne 31 ragt aus der Kederaufnahme 28 bzw. dem Vertikalrohr 27 im Bereich der schlitzförmigen Ausnehmung 33 des Vertikalrohrs 27 hervor. Die Fahne 31 weist des Weiteren einen Schlitz 32 auf. In diesen Schlitz 32 kann ein Verstärkungselement 22 eingefädelt werden. In anderen Worten kann der Endabschnitt 24 eines Verstärkungselements 22 in den Schlitz 32 der Fahne 31 eingefädelt werden, so dass ein Umschlagsabschnitt 26 des Verstärkungselements 22 gebildet werden kann. In anderen Worten wird anstelle des Keders 19 für den zu bildenden Umschlagsabschnitt 26 des Verstärkungselements 22 in dem Vertikalrohr 27 bzw. in der Laufbahn der Wickelwelle ein Rundmaterial in Form eines Gleitelements 30 positioniert. Eine Fahne 31 bildet des Weiteren einen Schlitz 32 bzw. eine Öse oder Ähnliches aus, so dass ein Verstärkungselement 22, insbesondere in Form eines Gurtbandes, durchgeschleift werden kann.

In einer alternativen Ausführungsform der Erfindung kann das Verstärkungselement 22 mittelbar oder unmittelbar im Vertikalrohr 27 befestigt werden.

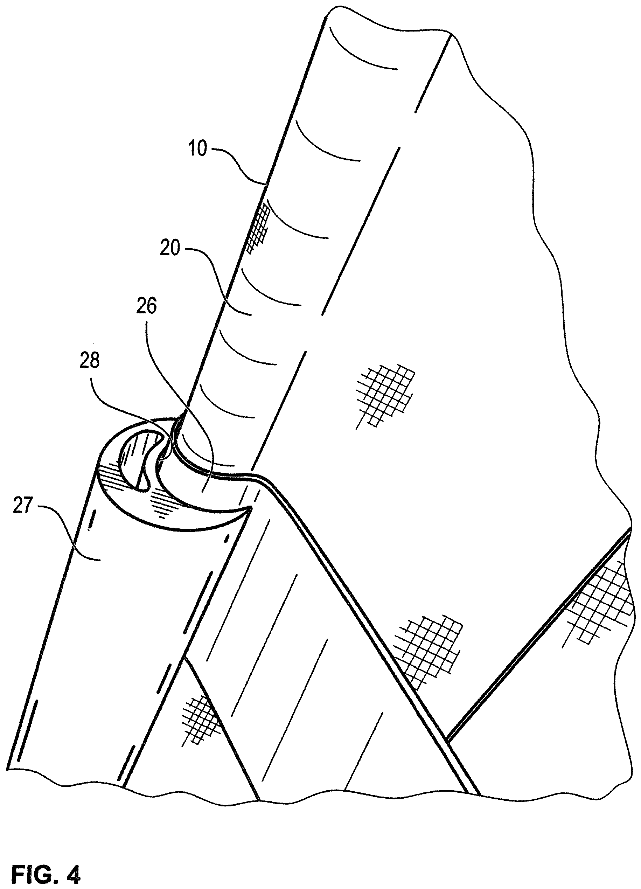

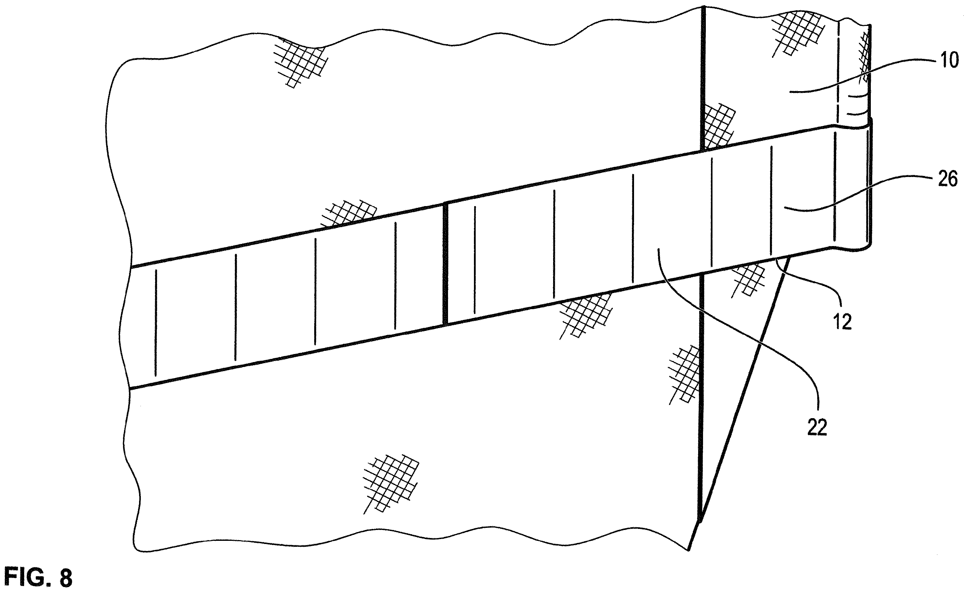

In Fig. 8 wird eine weitere Ausführungsform der Erfindung dargestellt. Demnach ist es möglich, eine Seitenplane 10 an der unteren Kante 12 mit Hilfe eines Verstärkungselements 22 in Form eines Gurtbandes zu verstärken. Die Befestigung kann wie in den Figuren 2-5 verdeutlicht wurde erfolgen. Eine derartige Verstärkung einer Plane bzw. Seitenplane 10 ist von besonderem Vorteil, da Seitenplanen 10 erfahrungsgemäß im Laufe der Zeit oftmals von der unteren Kante 12 beginnend nach oben entlang des Keders 19 einreißen.

### Bezugszeichenliste

- 10: Seitenplane
- 11: Rolle
- 12: untere Kante
- 13: obere Kante
- 14: vordere Seitenkante
- 15: hintere Seitenkante
- 16: Spanngurt
- 17: vertikale Gurtbänder
- 18: horizontale Gurtbänder
- 19: Keder
- 20: Umschlagsabschnitt der Seitenplane
- 21: Aussparung
- 22: Verstärkungselement
- 23: Innenseite der Seitenplane
- 24: Endabschnitt
- 25: Längsabschnitt
- 26: Umschlagsabschnitt des Verstärkungselements
- 27: Vertikalrohr
- 28: Kederaufnahme
- 29: Führungsmittel
- 30: Gleitelement
- 31: Fahne
- 32: Schlitz
- 33: Ausnehmung Vertikalrohr

## Patentansprüche

1. Nutzfahrzeugaufbau mit einer Seitenplane (10) und mit einem Vertikalrohr (27), wobei die Seitenplane (10) entlang eines Umschlagsabschnitts (20) mindestens eine Aussparung (21) aufweist, wobei ein Verstärkungselement (22) in der Aussparung (21) angeordnet oder anordenbar ist,
**dadurch gekennzeichnet, dass**
die Seitenplane (10) einen Keder (19) aufweist, der in dem Umschlagsabschnitt (20) der Seitenplane (10) angeordnet oder anordenbar ist, das Verstärkungselement (22) zumindest abschnittsweise horizontal auf der Seitenplane (10) fluchtend zu mindestens einer Aussparung (21) des Umschlagabschnitts (20) der Seitenplane (10) angeordnet oder anordenbar ist.

2. Nutzfahrzeugaufbau nach Anspruch 1,
**dadurch gekennzeichnet, dass**
das Verstärkungselement (22) ein Gurtband, insbesondere einen PVC-Gurtband und/oder ein PVC-beschichtetes Gurtband, ist.

3. Nutzfahrzeugaufbau nach Anspruch 1 oder 2,
**dadurch gekennzeichnet, dass**
das Verstärkungselement (22) zumindest abschnittsweise auf der Seitenplane (10) befestigt, insbesondere mit der Seitenplane (10) verklebt und/oder verschweißt und/oder vernäht und/oder vernietet und/oder verschraubt ist.

4. Nutzfahrzeugsaufbau nach einem der vorhergehenden Ansprüche,
**dadurch gekennzeichnet, dass**
die mindestens eine Aussparung (21) eine U-förmige Kontur und/oder rechteckförmige Kontur aufweist und den Umschlagsabschnitt (20) der Seitenplane (10) abschnittsweise unterbricht.

5. Nutzfahrzeugaufbau nach einem der vorhergehenden Ansprüche,
**dadurch gekennzeichnet, dass**
das Verstärkungselement (22) einen Umschlagsabschnitt (26) aufweist.

6. Nutzfahrzeugaufbau nach Anspruch 5,
**dadurch gekennzeichnet, dass**
der Keder (19) in dem Umschlagsabschnitt (26) des Verstärkungselements (22) angeordnet oder anodenbar ist.

7. Nutzfahrzeugaufbau nach einem der vorhergehenden Ansprüche,
**dadurch gekennzeichnet, dass**
ein Endabschnitt (24) des Verstärkungselements (22) mit einem Längsabschnitt (25) des Verstärkungselements (22) verbunden oder verbindbar, insbesondere verklebt und/oder verschweißt und/oder vernäht und/oder vernietet und/oder verschraubt, ist.

8. Nutzfahrzeugaufbau nach einem der vorhergehenden Ansprüche,
**dadurch gekennzeichnet, dass**
das Verstärkungselement (22) mit dem Vertikalrohr (27) und/oder mit dem Keder (19) verbunden oder verbindbar, insbesondere verklebt und/oder verschweißt und/oder vernäht und/oder vernietet und/oder verschraubt, ist.

9. Nutzfahrzeugaufbau nach einem der vorhergehenden Ansprüche,
**dadurch gekennzeichnet, dass**
der Keder (19) und/oder das Vertikalrohr (27) ein Führungsmittel (29) zur Führung und/oder Arretierung des Verstärkungselements (22) aufweist.

10. Nutzfahrzeugaufbau nach einem der vorhergehenden Ansprüche,
**dadurch gekennzeichnet, dass**
der Keder (19) in einer Kederaufnahme (28) des Vertikalrohrs (27) angeordnet oder anordenbar ist.

11. Nutzfahrzeug, insbesondere Sattelauflieger oder Sattelaufliegergespann, mit einem Nutzfahrzeugaufbau nach einem der vorhergehenden Ansprüche.

12. Verfahren zur Herstellung eines Nutzfahrzeugaufbaus nach einem der Ansprüche 1 bis 10,
**gekennzeichnet durch**,
a) Einbringen einer Aussparung (21) in den Umschlagsabschnitt (20) der Seitenplane (10),
b) zumindest abschnittsweises Befestigen des Verstärkungselement (22) auf der Seitenplane (10),
c) Anordnung des Verstärkungselementes (22) in der Aussparung (21) des Umschlagsabschnitts (20) der Seitenplane (10).

13. Verfahren nach Anspruch 12,
**gekennzeichnet durch**,
d) Bildung eines Umschlagsabschnittes (26) des Verstärkungselementes (22) und
e) Befestigen des Endabschnitts (24) des Verstärkungselements (22) mit dem Längsabschnitt (25) des Verstärkungselements (22).

## Claims

1. A commercial vehicle body having a side curtain (10) and having a vertical tube (27), wherein the side curtain (10) has at least one cavity (21) along a foldover portion (20), wherein a reinforcing element (22) is arranged or can be arranged in the cavity (21),
**characterized in that**
the side curtain (10) has a welt (19) which is arranged or can be arranged in the foldover portion (20) of the side curtain (10), the reinforcing element (22) is arranged or can be arranged at least in sections horizontally on the side curtain (10) aligning with at least one cavity (21) in the foldover portion (20) of the side curtain (10).

2. The commercial vehicle body according to claim 1,
**characterized in that**
the reinforcing element (22) is a belt strap, in particular a PVC belt strap and/or a PVC-coated belt strap.

3. The commercial vehicle body according to claim 1 or 2,
**characterized in that**
the reinforcing element (22) is fastened at least sectionally to the side curtain (10), in particular adhered and/or bonded and/or sewn and/or riveted and/or screwed to the side curtain (10).

4. The commercial vehicle body according to one of the preceding claims,
**characterized in that**
the at least one cavity (21) has a U-shaped contour and/or rectangular contour and interrupts the foldover portion (20) of the side curtain (10) in sections.

5. The commercial vehicle body according to one of the preceding claims,
**characterized in that**
the reinforcing element (22) has a foldover portion (26) .

6. The commercial vehicle body according to claim 5,
**characterized in that**
the welt (19) is arranged or can be arranged in the foldover portion (26) of the reinforcing element (22).

7. The commercial vehicle body according to one of the preceding claims,
**characterized in that**
an end portion (24) of the reinforcing element (22) is connected or can be connected to a longitudinal portion (25) of the reinforcing element (22), in particular adhered and/or bonded and/or sewn and/or riveted and/or screwed.

8. The commercial vehicle body according to one of the preceding claims,
**characterized in that**
the reinforcing element (22) is connected or can be connected to the vertical tube (27) and/or to the welt (19), in particular adhered and/or bonded and/or sewn and/or riveted and/or screwed.

9. The commercial vehicle body according to one of the preceding claims,
**characterized in that**
the welt (19) and/or the vertical tube (27) has a guide means (29) for guiding and/or locking the reinforcing element (22).

10. The commercial vehicle body according to one of the preceding claims,
**characterized in that**
the welt (19) is arranged or can be arranged in a welt receiving means (28) of the vertical tube (27).

11. A commercial vehicle, in particular a semi-trailer or pair of semi-trailers, having a commercial vehicle structure according to one of the preceding claims.

12. A method for manufacturing a commercial vehicle structure according to one of claims 1 to 10, **characterized by**
a) introduction of a cavity (21) into the foldover portion (20) of the side curtain (10),
b) at least sectional fastening of the reinforcing element (22) to the side curtain (10),
c) arrangement of the reinforcing element (22) in the cavity (21) of the foldover portion (20) of the side curtain (10).

13. A method according to claim 12,
**characterized by**
d) formation of a foldover portion (26) of the reinforcing element (22) and
e) fastening of the end portion (24) of the reinforcing element (22) to the longitudinal portion (25) of the reinforcing element (22).

## Revendications

1. Structure de véhicule utilitaire doté d'une bâche latérale (10) et avec un tube vertical (27), la bâche latérale (10) comportant au moins un évidement (21) le long d'une section de rabattement (20), un élément de renfort (22) étant disposé ou pouvant être disposé dans l'évidement (21),
**caractérisée en ce que**
la bâche latérale (10) comporte un bourrelet (19) qui est disposé ou peut être disposé dans la section de rabattement (20) de la bâche latérale (10), l'élément de renfort (22) étant disposé ou pouvant être disposé au moins par section horizontalement sur la bâche latérale (10) en alignant au moins l'évidement (21) de la section de rabattement (20) de la bâche latérale (10) .

2. Structure de véhicule utilitaire selon la revendication 1, **caractérisée en ce que** l'élément de renfort (22) est une sangle, notamment une sangle en PCV (Polychlorure de vinyle) et/ou une sangle revêtue de PCV.

3. Structure de véhicule utilitaire selon la revendication 1 ou 2, **caractérisée en ce que** l'élément de renfort (22) est fixé au moins par section sur la bâche latérale (10), est notamment collé et/ou soudé et/ou cousu et/ou riveté et/ou vissé à la bâche latérale (10).

4. Structure de véhicule utilitaire selon l'une quelconque des revendications précédentes, **caractérisée en ce qu'**au moins un évidement (21) comporte un contour en forme de U et/ou un contour rectangulaire et interrompt par section la section de rabattement (20) de la bâche latérale (10).

5. Structure de véhicule utilitaire selon l'une quelconque des revendications précédentes, **caractérisée en ce que** l'élément de renfort (22) comporte une section de rabattement (26).

6. Structure de véhicule utilitaire selon la revendication 5, **caractérisée en ce que** le bourrelet (19) est disposé ou peut être disposé dans la section de rabattement (26) de l'élément de renfort (22).

7. Structure de véhicule utilitaire selon l'une quelconque des revendications précédentes, **caractérisée en ce qu'**une section d'extrémité (24) de l'élément de renfort (22) est reliée ou peut être reliée à une section longitudinale (25) de l'élément de renfort (22), notamment collée et/ou soudée et/ou cousue et/ou rivetée et/ou vissée.

8. Structure de véhicule utilitaire selon l'une quelconque des revendications précédentes, **caractérisée en ce que** l'élément de renfort (22) est relié ou peut être relié au tube vertical (27) et/ou au bourrelet (19), notamment collé et/ou soudé et/ou cousu et/ou riveté et/ou vissé.

9. Structure de véhicule utilitaire selon l'une quelconque des revendications précédentes, **caractérisée en ce que** le bourrelet (19) et/ou le tube vertical (27) comporte un moyen de guidage (29) pour guider et/ou arrêter l'élément de renfort (22).

10. Structure de véhicule utilitaire selon l'une quelconque des revendications précédentes, **caractérisée en ce que** le bourrelet (19) est disposé ou peut être disposé dans un logement de bourrelet (28) du tube vertical (27).

11. Véhicule utilitaire, notamment semi-remorque ou attelage de semi-remorque avec une structure de véhicule utilitaire selon l'une quelconque des revendications précédentes.

12. Procédé de fabrication d'une structure de véhicule utilitaire selon l'une quelconque des revendications 1 à 10, **caractérisé par**
a) aménagement d'un évidement (21) dans la section de rabattement (20) de la bâche latérale (10),
b) fixation au moins par section de l'élément de renfort (22) sur la bâche latérale (10),
c) mise en place de l'élément de renfort (22) dans l'évidement (21) de la section de rabattement (20) de la bâche latérale (10).

13. Procédé selon la revendication 12, **caractérisé par**
d) formation d'une section de rabattement (26) de l'élément de renfort (22), et
e) fixation de la section d'extrémité (24) de l'élément de renfort (22) à la section longitudinale (25) de l'élément de renfort (22).
